## Europäisches Patentamt

## European Patent Office

## Office européen des brevets

(11) Veröffentlichungsnummer: **0 124 126**
**B1**

(12) **EUROPÄISCHE PATENTSCHRIFT**

(19)

(45) Veröffentlichungstag der Patentschrift:
**11.03.87**

(21) Anmeldenummer: **84104857.2**

(22) Anmeldetag: **30.04.84**

(51) Int. Cl.⁴: **B 27 K 3/50**

(30) Priorität: **03.05.83 DE 3316007**

(43) Veröffentlichungstag der Anmeldung:
**07.11.84 Patentblatt 84/45**

(45) Bekanntmachung des Hinweises auf die Patenterteilung:
**11.03.87 Patentblatt 87/11**

(84) Benannte Vertragsstaaten:
**AT BE CH DE FR GB LI NL SE**

(56) Entgegenhaltungen:
**EP - A - 0 038 932**
**EP - A - 0 076 449**

(73) Patentinhaber: **BASF Aktiengesellschaft,
Carl-Bosch-Strasse 38, D-6700 Ludwigshafen (DE)**

(72) Erfinder: **Reuther, Wolfgang, Dr., Am Pferchelhang 16,
D-6900 Heidelberg (DE)**
Erfinder: **Borck, Hans Volker, Dipl.-Holzwirt, Am
Kastanienwald 8, D-7570 Baden-Baden (DE)**

(54) **Holzschutzmittel.**

## Beschreibung

Es ist bekannt, zum Schutz von Holz gegen den Angriff holzzerstörender Pilze, wie Ceniophora cerebella, Poria monticola, Coriolus versicolor, Lenzites trabea u.a., N-Cyclohexyl-N-methoxy-2,5-dimethyl-furan-3-carbonsäureamid zu verwenden (US-PS 3993772). Davon sind jedoch für einen wirksamen Holzschutz verhältnismässig hohe Anwendungskonzentrationen erforderlich.

Es ist bekannt, dass sich auch mit o-Iodbenzoesäureanilid wirkungsvoll holzzerstörende Basidiomyceten bekämpfen lassen. Aufgrund einer gewissen Wirkungsschwäche, besonders bei Poria monticola, sind jedoch auch bei dieser Substanz relativ hohe Aufwandkonzentrationen erforderlich. Hinzu kommt, dass sich dieser Stoff in allen Holzschutz gebräuchlichen Lösungsmitteln sehr schlecht löst, was seine praktische Anwendung ausserordentlich einschränkt.

Weiterhin ist bekannt, dass aus der EP-A-76449 N-Cyclohexyl-N-methoxy-2,5-dimethyl-furan-3-carbonsäureamid und Bis-(tri-n-butylzinn)oxid sich gegenseitig in ihrer Wirkung ergänzen, wobei beiläufig angegeben ist, dass andere Holzschutzmittel als Mischungspartner zugesetzt werden können, u.a. 2-Halogenbenzoesäureanilid.

Die nachstehend beschriebene Mischung und deren vorteilhafte Wirkung ist jedoch in der EP-A-76449 weder beschrieben noch angeregt.

Es wurde nun gefunden, dass eine Mischung aus N-Cyclohexyl-N-methoxy-2,5-dimethyl-furan-3-carbonsäureamid und o-Iodbenzoesäureanilid eine über die Wirksamkeit der Einzelwirkstoffe hinausgehende fungizide Wirksamkeit aufweist, d.h. es liegt ein Synergismus vor.

Darüber hinaus wurde erkannt, dass N-Cyclohexyl-N-methoxy-2,5-dimethyl-furan-3-carbonsäureamid für o-Iodbenzoesäureanilid einen ausgezeichneten Lösungsvermittler darstellt. So ist es z.B. möglich, die für einen sachgemässen Holzschutz erforderlichen Mengen des Wirkstoffs bzw. der Wirkstoffkombination ohne zusätzliche organische Lösungsmittel zu verwenden. Das Mischungsverhältnis der beiden Wirkstoffe kann in einem weiten Bereich schwanken; zur Ausnutzung besonders der löslichkeitsverbessernden Wirkung und aufgrund der genannten praktischen und auch aus wirtschaftlichen Gründen empfiehlt sich für A:B ein Gewichtsverhältnis von 1:1 bis 10:1 aus. So wurde z.B. bei einem Gewichtsverhältnis A:B wie 8,5:1,5, d.h. 5,6:1 eine hervorragende Wirkung gegen holzzerstörende Pilze aller Art erzielt.

Die neue Wirkstoffmischung kann in Form üblicher Zubereitungen wie Lösungen, Emulsionen, Pasten und Öldispersionen angewendet werden. Die Zubereitungen enthalten im allgemeinen zwischen 0,1 und 90 Gew.% Wirkstoffgemisch, vorzugsweise 0,25 bis 50%. Die unverdünnte Mischung anzuwenden ist wie gesagt möglich.

Von dem Wirkstoffgemisch werden je nach Holzart und Verwendungszweck des zu schützenden Holzes 0,05 bis 5, vorzugsweise 0,1 bis 2 kg je m³ Holz in das Holz ein- bzw. aufgebracht. Die obere Grenze ergibt sich aus wirtschaftlichen Überlegungen und kann im Einzelfall auch höher liegen, z.B. wenn eine besonders lang anhaltende Wirkung gewünscht wird oder besonders hoher Infektionsdruck zu erwarten ist.

Die Anwendung des Wirkstoffgemisches erfolgt z.B. in öliger oder wässriger Form durch Streichen, Spritzen, Sprühen und Tauchen. Die Anwendungsmengen, bezogen auf die Holzoberfläche, betragen bei diesen Verfahren je nach Anwendungszweck und Wirkstoffkonzentration im allgemeinen 75 bis 350, vorzugsweise 100 bis 200 g einer geeigneten Zubereitung je m² Holzoberfläche. Zubereitungen wie Grundier- und Anstrichmittel für Holz enthalten beispielsweise 0,5 bis 3,5 Gew.-% der Wirkstoffmischung.

Ein besonders effektiver Holzschutz wird erzielt, wenn das Wirkstoffgemisch in Autoklaven, Kesseln, Kammern in speziellen technischen Verfahren, z.B. unter Anwendung des Vakuumverfahrens, Vakuumdruckverfahrens oder Doppelvakuumverfahrens in das Holz eingebracht wird. Zum Schutz von Holzwerkstoffen, die unter Verwendung von Bindemitteln erhalten werden, z.B. Span-, Faser- oder Sperrholzplatten kann das Wirkstoffgemisch bei der Herstellung der Holzwerkstoffe z.B. als Emulsion oder als solches dem Bindemittel (Klebstoff), z.B. in Mengen von 2 bis 6 Gew.-%, bezogen auf den Klebstoff zugesetzt oder unabhängig vom Bindemittel auf die Holzbestandteile auf- bzw. eingebracht werden.

Zur Vergrösserung des Wirkungsspektrums oder zur Erzielung besonderer Effekte können der Wirkstoffmischung weiterhin z.B. Insektizide und andere Wirkstoffe zugesetzt werden. Besonders günstige Mischungspartner sind folgende Verbindungen:

Trialkylzinnverbindungen
Methylenbisthiocyanat
2-Halogen-benzoesäureanilid
N,N-Dimethyl-N'-phenyl-(N-fluormethylthio)-sulfamid
N-Phenyl-N,N'-dimethyl-N'-fluordichlormethyl-thio-sulfonyl-diamid
Benzimidazol-2-carbaminsäure-methylester
2-Thicyanomethyl-thiobenzothiazol
Kupfernaphthenat
8-Hydroxychinolin bzw. dessen Kupfersalz
N-Trichlormethylthio-tetrahydrophthalimid
N-Trichlormethylthio-phthalimid
N-(1,1,2,2-Tetrachlorethylthio)-tetrahydrophrophthalimid
N,N-Dimethyl-N'-p-tolyl-N'-dichlorfluormethyl-thiosulfamid
1-[2-(2,4-Dichlorphenyl-)-4-ethyl-1,3-dioxolan-2-yl-methyl]-1H-1,2,4-triazol
1-[2-(2,4-Dichlorphenyl)4-propyl-1,3-dioxolan-2-yl-methyl]-1H-1,2,4-triazol
Tetrachlorisophthalsäure-dinitril.
Tris(N-cyclohexyl-diazeniumdioxy)aluminium

Dem Holzschutzmittel können auch Korrosionsinhibitoren, Bindemittel und sonstige Anstrichhilfsmittel zugesetzt werden (vgl. Beispiel 3).

Zur Erzielung von Farbeffekten können feinteilige anorganische oder organische Pigmente oder öllösliche Farbstoffe in die Holzschutzmittel eingearbeitet werden. Zur Herstellung wasserabweisender Imprägnieranstriche können den Holzschutzmitteln sogenannte «water repellents», wie Metallstearate oder Wachse, zugesetzt werden.

Beispiel 1
Grenzwertbestimmung der Wirkung gegen holzzerstörende Pilze

Das Verfahren dient zur Bestimmung der vorbeugenden Wirkung von Holzschutzmitteln gegen holzzerstörende Pilze aus der Klasse der Basidiomyceten. Seine praktische Ausführung entspricht den Bestimmungen der DIN 52 172 und DIN 52 176. Die Wirkstoffe werden in Isopropanol gelöst. Gleichartige, bei 103 °C bis zur Gewichtskonstanz getrocknete Holzklötzchen (5 × 2,5 × 1,5 cm) werden mit abgestuften Mengen des zu prüfenden Holzschutzmittels vollgetränkt, getrocknet, mit Wasser ausgewaschen (Auswaschung der Wirkstoffmischung aus dem Holz) und in Glasschalen dem Angriff von Kulturen holzzerstörender Basidiomyceten ausgesetzt. Als Nährboden für die Pilze dient Malzagar (enthaltend 4% Malzextrakt). Die durch den Pilzbefall bewirkte Zerstörung des Holzes wird durch den Gewichtsverlust der Probehölzer erfasst; ein Gewichtsverlust von 2% und mehr wird als Holzzerstörung gewertet.

Angegeben wird eine untere Wirkstoffkonzentration, bei der das Holz gerade noch zerstört wird, und eine obere Wirkstoffkonzentration, bei der keine Holzzerstörung mehr zu erkennen ist, somit ein vollständiger Holzschutz erreicht ist. Für die Bewertung eines Holzschutzmittels in der Praxis ist immer von der oberen Wirkstoffkonzentration nach Auswaschung auszugehen.

Grenzwertbestimmung der Wirkung gegen holzzerstörende Pilze nach Auswaschung (in kg Wirkstoff je m³ Holz).

Wirkstoff A = N-Cyclohexyl-N-methoxy-2,5-dimethyl-furan-3-carbonsäureamid
Wirkstoff B = o-Iodbenzoesäureanilid

| Wirkstoff | Coniophora puteana | Poria monticola | Coriolus versicolor |
|---|---|---|---|
| A | 0,1–0,3 | 0,3–0,8 | 0,05–0,12 |
| B | 0,5–1,2 | 2,4–5,0 | 0,4 –1,0 |
| B | 0,5–1,2 | 2,4–5,0 | 0,4 –1,0 |
| Wirkstoffmischung A : B = 8,5 : 1,5 | 0,1–0,3 | 0,12 | 0,1 |

Das Ergebnis des Versuches zeigt, dass eine Mischung der Wirkstoffe A und B im Gewichtsverhältnis 8,5 : 1,5 gegenüber den Einzelwirkstoffen eine deutlich bessere Wirksamkeit besitzt.

Beispiel 2
Rezepturbeispiel, öliges Mittel
N-Cyclohexyl-N-methoxy-2,5-dimethyl-furan-3

| | |
|---|---|
| -carbonsäureamid | 1,5 Gew.-% |
| Iodbenzoesäureanilid | 0,5 Gew.-% |
| γ-Hexachlorcyclohexan | 0,5 Gew.-% |
| Sikkativ (Metallsalz von Fettsäuren) | 0,25 Gew.-% |
| Alkydharz (berechnet ohne Lösungsmittel) | 12,0 Gew.-% |
| Lösungsmittelgemisch aus aromatischen und alipatischen Kohlenwasserstoffen (Siedbereich 180–220 °C) | 85,25 Gew.-% |
| | 100,00 Gew.-% |

Im vorstehenden Beispiel 2 beträgt der Wirkstoffanteil A + B = 2%.

In entsprechender Weise lassen sich ölige Holzschutzmittel mit z. B. 0,25 bis 5 Gew.-% der Wirkstoffmischung A + B herstellen, wobei das Gewichtsverhältnis A : B variieren kann.

Beispiel 3
Rezepturbeispiel, wässriges Mittel
N-Cyclohexyl-N-methoxy-2.5-dimethyl-furan-

| | |
|---|---|
| -3-carbonsäureamid | 1–2 Gew.-% |
| Iodbenzoesäureanilid | 0,5 Gew.-% |
| γ-Hexachlorcyclohexan | 0,5 Gew.-% |
| Emulgator | 1,0 Gew.-% |
| Pigmentpräparation | 2–5 Gew.-% |
| Sikkativ | 1 Gew.-% |
| Alkydharz, wasserverdünnbar, neutral | 20 Gew.-% |
| Butylglykol | 5 Gew.-% |
| Wasser | ad 100 Gew.-% |

**Patentansprüche**

1. Holzschutzmittel, enthaltend
A) N-Cyclohexyl-N-methoxy-2,5-dimethyl-furan-3-carbonsäureamid und
B) o-Iodbenzoesäureanilid.
2. Verfahren zum Schutz von Holz, dadurch gekennzeichnet, dass man das Holz mit einer Mischung aus wirksamen Mengen von
A) N-Cyclohexyl-N-methoxy-2,5-dimethyl-furan-3-carbonsäureamid und
B) o-Iodbenzoesäureanilid
behandelt.

**Claims**

1. A wood preservative containing
A) N-cyclohexyl-N-methoxy-2,5-dimethylfuran-3-carboxamide
and
B) o-iodobenzoic acid anilide.
2. A method of preserving wood, wherein the wood is treated with a mixture of effective amounts of

A) N-cyclohexyl-N-methoxy-2,5-dimethylfuran-3-carboxamide
and
B) o-iodobenzoic acid anilide.

## Revendications

1. Produit pour la conservation du bois, contenant

A) de l'amide de l'acide N-cyclohexyl-N-méthoxy-2,5-diméthyl-furanne-3-carboxylique
et
B) de l'anilide de l'acide o-iodo-benzoïque.

2. Procédé pour la protection du bois, caractérisé en ce que l'on traite le bois avec un mélange de quantités efficaces de
A) l'amide de l'acide N-cyclohexyl-N-méthoxy-2,5-diméthyl-furanne-3-carboxylique et de
B) l'anilide de l'acide o-iodo-benzoïque.